# EUROPÄISCHE PATENTSCHRIFT

(11) **EP 4 731 477 B1**
(45) Veröffentlichungstag und Bekanntmachung des Hinweises auf die Patenterteilung: **07.10.2026**
(21) Anmeldenummer: 24730631.9
(22) Anmeldetag: 23.05.2024
(51) Int. Cl.: B60Q 1/14, G06V 10/145, G06V 20/56

(54) **VERFAHREN ZUR STEUERUNG VON FERNLICHT AN EINEM FAHRZEUG**
METHOD FOR CONTROLLING THE HIGH BEAM ON A VEHICLE
PROCÉDÉ DE COMMANDE DES FEUX DE ROUTE SUR UN VÉHICULE

(30) Priorität: 20.06.2023 DE 102023002491
(43) Veröffentlichungstag der Anmeldung: 29.04.2026
(73) Patentinhaber: Mercedes-Benz Group AG, 70372 Stuttgart (DE)
(72) Erfinder: GUT, Carsten, 71404 Korb (DE)
(74) Vertreter: Novagraaf Group
(86) Internationale Anmeldenummer: PCT/EP2024/064278
(87) Internationale Veröffentlichungsnummer: WO 2024/260677

(56) Entgegenhaltungen:
- EP-A1- 2 056 093
- EP-A1- 3 318 441
- EP-A2- 2 272 714
- DE-A1- 10 205 184
- DE-A1- 102018 212 506
- US-A1- 2013 169 155
- US-A1- 2017 083 774

## Beschreibung

Die Erfindung betrifft ein Verfahren zur Steuerung von Fernlicht an einem Fahrzeug. Fernlicht wird immer dann aktiviert, sofern auf einer nichtbeleuchteten Straße gefahren wird. Dies kann innerorts oder auch außerorts der Fall sein. Insbesondere wird Fernlicht an einem Fahrzeug dann verwendet, wenn dieses sich außerhalb von Ortschaften befindet. Soll das Fernlicht automatisch aktiviert werden, so erfolgt dies meist über eine visuelle Erkennung. Aus dem Stand der Technik ist dabei das Verfahren bekannt, über eine visuelle Erkennung von Straßenlaternen darauf zu schließen, ob sich das Fahrzeug innerorts oder außerorts befindet.

Nachteilig werden dabei die Straßenlaternen an sich erkannt, jedoch nicht deren Zustand. Dies bedeutet insbesondere, dass über die Erkennung nicht sichergestellt werden kann, ob die Straßenlaternen tatsächlich leuchtet oder nicht. Des Weiteren kann nicht darauf geschlossen werden, ob die Straße tatsächlich durch die Straßenlaterne ausgeleuchtet wird. Folglich kann die tatsächliche Beleuchtungssituation nicht sichergestellt werden, wodurch es zu fehlerhafter Aktivierung von Fernlicht am Fahrzeug kommen kann.

Dies ist insbesondere dann problematisch, wenn sich das Fahrzeug innerhalb einer Ortschaft befindet. In beleuchteten Ortschaften muss das Fernlicht nämlich deaktiviert sein und darf laut Straßenverkehrsordnung erst dann eingeschaltet werden, wenn die Straße nicht mehr aktiv beleuchtet ist.

Die US 9,527,429 B2 beschreibt ein Verfahren zur Steuerung einer Frontbeleuchtung eines Fahrzeugs. Damit kann die Frontbeleuchtung an sich gesteuert werden, jedoch unabhängig von einer Beleuchtungssituation durch ein Fernlicht.

Die DE 10 2018 212506 A1 beschreibt ein Verfahren zur Steuerung von Fernlicht an einem Fahrzeug in Abhängigkeit der Beleuchtung einer Straße.

Die Aufgabe der vorliegenden Erfindung besteht nun darin, ein Verfahren zur Steuerung von Fernlicht an einem Fahrzeug anzugeben, welches die vorgenannten Nachteile überwindet. Insbesondere besteht die Herausforderung darin, zu erkennen, ob eine Straße tatsächlich beleuchtet ist oder nicht.

Erfindungsgemäß wird diese Aufgabe durch ein Verfahren mit den Merkmalen im Anspruch 1, und hier insbesondere im kennzeichnenden Teil des Anspruchs 1 gelöst. Vorteilhafte Ausgestaltungen und Weiterbildungen ergeben sich aus den hiervon abhängigen Unteransprüchen.

Im Kern des erfindungsgemäßen Verfahrens wird eine Spurmarkierung einer Fahrbahn detektiert, wobei über eine Länge der erkannten Spurmarkierung auf eine Beleuchtungssituation der Umgebung geschlossen wird, und bei Unterschreiten einer Soll-Länge das Fernlicht aktiviert wird. Damit kann die tatsächliche Beleuchtungssituation der Straße mit einbezogen werden, und nicht ausschließlich das Vorhandensein von Straßenlaternen, insbesondere unabhängig von deren Zustand. Durch Erkennung der Spurmarkierung kann auf den Beleuchtungsgrad der Umgebung geschlossen werden. Wird eine besonders lange Spurmarkierung erkannt, so scheint die Beleuchtungssituation der Umgebung ausreichend zu sein, wodurch kein Fernlicht erforderlich wird. Ist die erkannte Spurmarkierung relativ kurz, d. h. die Spurmarkierung ist lediglich in einem geringeren Raum vor dem Fahrzeug zu erkennen, so scheint keine ausreichende Beleuchtungssituation in der Umgebung vorzulegen. Demnach kann das Fernlicht in einer derartigen Umgebung aktiviert werden.

Das Verfahren ist zur Steuerung von Fernlicht an einem Fahrzeug ausgelegt, wobei in Abhängigkeit der Beleuchtung einer Straße das Fernlicht gesteuert wird. Dadurch, dass die tatsächliche Helligkeit der Umgebung berücksichtigt wird, wird das Fernlicht lediglich außerhalb geschlossener Ortschaften zuverlässig aktiviert.

Die Erkennung der Spurmarkierung kann über bereits am Fahrzeug eingebaute Kameras erfolgen. Insbesondere können Kameras verwendet werden, die rechts und links neben dem Fahrzeug die Spurmarkierungen aufnehmen können. Dabei kann lediglich eine Spurmarkierung auf der rechten Seite des Fahrzeugs untersucht werden. In einer weiteren Ausführung können mehrere Spurmarkierungen der gesamten Fahrbahn untersucht werden, wobei ebenso Markierungen auf der Gegenfahrbahn oder Mittelmarkierungen mit einbezogen werden können.

Bevorzugt kann die Soll-Länge weniger als 60 m betragen. Eine derartige Länge hat sich als Grenzbereich gezeigt, um einen Grenzbereich für den Beleuchtungsgrad der Umgebung zu bestimmen. Wird demnach eine Spurmarkierung erkannt, die eine Länge von weniger als 60 m aufweist, so kann dem Fahrzeug mitgeteilt werden, dass das Fernlicht aktiviert werden kann. Dies kann automatisiert erfolgen.

Gemäß einer sehr vorteilhaften Weiterbildung der Idee kann es dabei vorgesehen sein, dass die Soll-Länge ab dem Fahrzeug gemessen wird. Folglich kann die Distanz zwischen dem Ego-Fahrzeug und der maximal entfernten und erkannten Spurmarkierung gemessen werden.

Dabei kann es gemäß einer vorteilhaften Ausgestaltung vorgesehen sein, dass die Soll-Länge in Richtung einer Fahrzeugbewegung auf der Straße gemessen wird. Insbesondere können dabei der Straßenverlauf sowie GPS-Daten einbezogen werden. Insbesondere in Situationen von Kreuzungen oder abzweigenden Straßen kann dadurch eine zuverlässige Vorhersage und eine Zuordnung der Spurmarkierung zu der tatsächlichen Fahrspur sichergestellt werden.

Eine weitere vorteilhafte Ausgestaltung kann es vorsehen, dass eine Deaktivierung des Fernlichts anhand einer Erkennung von Straßenlaternen erfolgt. Ist die Spurmarkierung über das Fernlicht bereits ausgeleuchtet, so ist diese in einem Bereich von beispielsweise 150 m vor dem Fahrzeug erkennbar. Eine Deaktivierung des Fernlichts lediglich durch die Erkennung der Länge einer Spurmarkierung ist daher weniger zuverlässig als die Deaktivierung bei Erkennung über das Vorhandensein von Straßenlaternen.

Dabei kann es gemäß einer vorteilhaften Ausgestaltung vorgesehen sein, dass eine Sensibilität der Detektion der Spurmarkierung in Abhängigkeit einer nassen oder trockenen Straße einstellbar ist, wodurch das Verfahren optimiert werden kann.

Gemäß einer sehr vorteilhaften Weiterbildung der Idee kann es dabei vorgesehen sein, dass die ermittelten Daten in einer Cloud gespeichert werden und anderen Fahrzeug zur Verfügung gestellt werden. In der Cloud kann eine Reichweitenerkennung der Fahrspur abgespeichert werden. Insbesondere kann dies in Kombination mit der Abspeicherung einer Uhrzeit und/oder einer Wettersituation, wie regen/trocken/nass, erfolgen.

Weitere vorteilhafte Ausgestaltungen des erfindungsgemäßen Verfahrens ergeben sich auch aus dem Ausführungsbeispiel, welches nachfolgend unter Bezugnahme auf die Figur näher dargestellt ist.

Dabei zeigt:

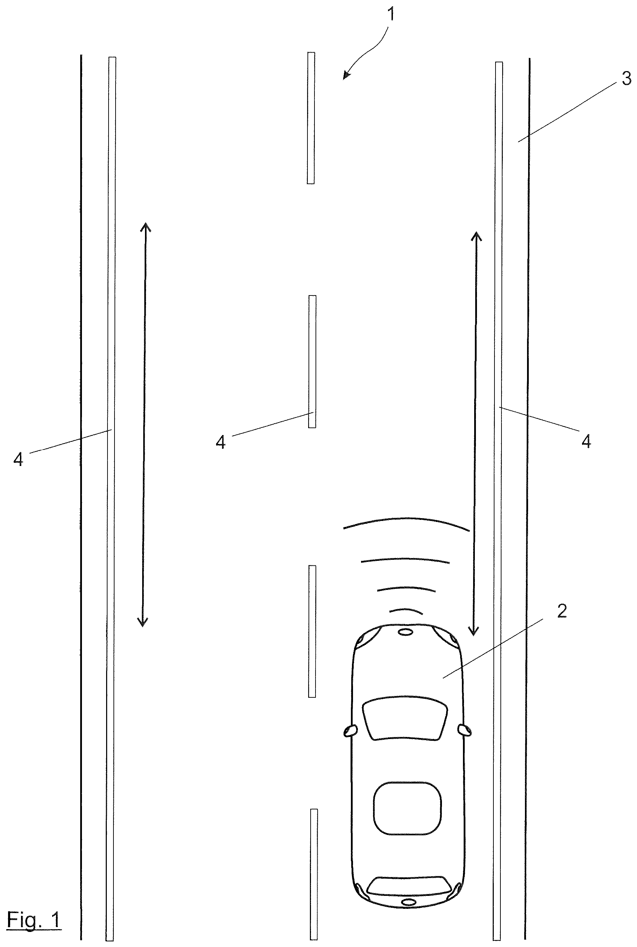

- Fig. 1: eine Ausführungsform des Verfahrens angewendet an einem Fahrzeug.

In der Darstellung der Fig. 1 ist eine mögliche Ausführungsform des Verfahrens 1 gezeigt. Das Verfahren 1 ist zur Steuerung von Fernlicht an einem Fahrzeug 2 ausgelegt, wobei in Abhängigkeit der Beleuchtung einer Straße 3 das Fernlicht gesteuert werden kann. In der dargestellten Situation bewegt sich das Fahrzeug 2 entlang der Straße 3 auf der rechten Fahrspur. Mithilfe von Sensoren, insbesondere mithilfe von bereits verbauten Kameras am Fahrzeug, kann die sichtbare Spurmarkierung vor dem Fahrzeug detektiert werden. Über die Länge der erkannten Spurmarkierung kann auf eine Beleuchtungssituation der Umgebung des Fahrzeugs 2 geschlossen werden. Unterschreitet die Länge der erkannten Spurmarkierung eine Soll-Länge, so wird das Fernlicht aktiviert.

Die Soll-Länge ist dabei über die beiden Pfeile dargestellt. Die Soll-Länge ist dabei bevorzugt die Distanz zwischen dem Ego-Fahrzeug 2 und der maximal entfernten und erkennbaren Spurmarkierung. Diese ist abhängig von der Straßenbeleuchtung. Insbesondere zeigen Distanzen kleiner 60 m an, dass die Straße 3 nicht oder nicht ausreichend beleuchtet ist. Distanzen von größer 60 m können beispielsweise nur dann gemessen werden, wenn die Straße aktiv beleuchtet wird. Folglich kann der Grenzwert für die Soll-Länge bei 60 m liegen.

Das erfindungsgemäße Verfahren stellt dabei eine robuste Erkennung einer beleuchteten Straße bereit, welche Vorteile gegenüber der reinen Erkennung von Straßenlaternen bietet.

## Patentansprüche

1. Verfahren (1) zur Steuerung von Fernlicht an einem Fahrzeug (2), wobei in Abhängigkeit der Beleuchtung einer Straße (3) das Fernlicht gesteuert wird, wobei eine Spurmarkierung (4) einer Fahrbahn detektiert wird, **dadurch gekennzeichnet, dass** über eine Länge der erkannten Spurmarkierung auf eine Beleuchtungssituation der Umgebung geschlossen wird, und bei Unterschreiten einer Soll-Länge das Fernlicht aktiviert wird.

2. Verfahren (1) nach Anspruch 1,
**dadurch gekennzeichnet, dass**
die Soll-Länge weniger als 60 m beträgt.

3. Verfahren (1) nach Anspruch 1 oder 2,
**dadurch gekennzeichnet, dass**
die Soll-Länge ab dem Fahrzeug (2) gemessen wird.

4. Verfahren (1) nach Anspruch 1, 2 oder 3,
**dadurch gekennzeichnet, dass**
die Soll-Länge in Richtung einer Fahrzeugbewegung auf der Straße gemessen wird.

5. Verfahren (1) nach einem der Ansprüche 1 bis 4,
**dadurch gekennzeichnet, dass**
eine Deaktivierung des Fernlichts anhand einer Erkennung von Straßenlaternen erfolgt.

6. Verfahren (1) nach Anspruch 1 bis 5,
**dadurch gekennzeichnet, dass**
eine Sensibilität der Detektion der Spurmarkierung (4) in Abhängigkeit einer nassen oder trockenen Straße (3) einstellbar ist.

7. Verfahren (1) nach Anspruch 1 bis 6,
**dadurch gekennzeichnet, dass**
die ermittelten Daten in einer Cloud gespeichert werden und anderen Fahrzeug zur Verfügung gestellt werden.

## Claims

1. Method (1) for controlling the high beam on a vehicle (2), the high beam being controlled on the basis of the illumination of a road (3),
with a lane marking (4) of a roadway being detected, **characterized in that** an illumination situation of the surroundings is inferred from a length of the recognized lane marking, and the high beam is activated if a target length is not met.

2. Method (1) according to claim 1,
**characterized in that**
the target length is less than 60 m.

3. Method (1) according to claim 1 or 2,
**characterized in that**
the target length is measured from the vehicle (2).

4. Method (1) according to claim 1, 2 or 3,
**characterized in that**
the target length is measured in the direction of a vehicle movement on the road.

5. Method (1) according to any of claims 1 to 4,
**characterized in that**
the high beam is deactivated on the basis of the recognition of streetlights.

6. Method (1) according to claims 1 to 5,
**characterized in that**
a sensitivity of the detection of the lane marking (4) can be adjusted on the basis of whether the road is wet or dry (3).

7. Method (1) according to claims 1 to 6,
**characterized in that**
the collected data are stored in a cloud and made available to other vehicle.

## Revendications

1. Procédé (1) permettant de commander des feux de route d'un véhicule (2), dans lequel les feux de route sont commandés en fonction de l'éclairage d'une route (3), dans lequel
un marquage au sol (4) d'une chaussée est détecté, **caractérisé en ce qu'**un état d'éclairage de l'environnement est déduit sur la base d'une longueur du marquage au sol détecté, et les feux de route sont activés lorsque cette longueur est inférieure à une longueur de consigne.

2. Procédé (1) selon la revendication 1,
**caractérisé en ce que**
la longueur de consigne est inférieure à 60 m.

3. Procédé (1) selon la revendication 1 ou 2,
**caractérisé en ce que**
la longueur de consigne est mesurée à partir du véhicule (2).

4. Procédé (1) selon la revendication 1, 2 ou 3,
**caractérisé en ce que**
la longueur de consigne est mesurée dans le sens du déplacement du véhicule sur la route.

5. Procédé (1) selon l'une des revendications 1 à 4,
**caractérisé en ce que**
les feux de route sont désactivés sur la base d'une détection de lampadaires.

6. Procédé (1) selon la revendication 1 à 5,
**caractérisé en ce**
**qu'**une sensibilité de la détection du marquage au sol (4) peut être réglée selon qu'une route (3) est mouillée ou sèche.

7. Procédé (1) selon la revendication 1 à 6,
**caractérisé en ce que**
les données déterminées sont stockées dans un cloud et mises à la disposition d'autres véhicules.
